# EUROPEAN PATENT SPECIFICATION

(11) **EP 3 184 374 B1**
(45) Date of publication and mention of the grant of the patent: **05.02.2020**
(21) Application number: 15833567.9
(22) Date of filing: 24.07.2015
(51) Int. Cl.: B60R 21/237, B60R 21/231

(54) **SIDE AIRBAG DEVICE**
SEITENAIRBAGVORRICHTUNG
DISPOSITIF DE COUSSIN GONFLABLE LATÉRAL

(30) Priority: 22.08.2014 JP 2014169060
(43) Date of publication of application: 28.06.2017
(73) Proprietor: Autoliv Development AB, 447 83 Vårgårda (SE)
(72) Inventor: KOBAYASHI, Yuto, Yokohama-shi Kanagawa 222-8580 (JP); FUMA, Makoto, Yokohama-shi Kanagawa 222-8580 (JP); FUKUDA, Hideho, Yokohama-shi Kanagawa 222-8580 (JP); NAKAJIMA, Yutaka, Yokohama-shi Kanagawa 222-8580 (JP); TAGUCHI, Hiroyuki, Yokohama-shi Kanagawa 222-8580 (JP); NOGAMI, Mitsuo, Yokohama-shi Kanagawa 222-8580 (JP)
(74) Representative: Müller Verweyen
(86) International application number: PCT/JP2015/071066
(87) International publication number: WO 2016/027616

(56) References cited:
- JP-A- 2001 171 468
- JP-A- 2004 203 272
- JP-A- 2011 001 051
- JP-A- 2011 073 562
- JP-A- 2013 082 435
- JP-A- 2013 091 421
- JP-A- 2013 184 647
- US-A1- 2010 295 277

## Description

### [Technical Field]

The present invention relates to a side airbag device including a side airbag which expands and deploys between a seat and a side door in an event of a side collision or a rollover of a vehicle.

### [Background Art]

As a side airbag device installed in a vehicle such as an automobile, for example, a side airbag device including a side airbag built into a side edge part of a seat back of a vehicle seat and an inflator which supplies gas for expansion and deployment to the side airbag is known. In addition, before expansion and deployment, the side airbag is housed inside the seat in a wound state (for example, PTL 1).

The side airbag described in PTL 1 is wound in a spiral shape around a center line which is substantially parallel to an axial line of the seat back. According to PTL 1, injuries to an occupant sitting on the seat are prevented by causing the side airbag to expand toward the front of the vehicle and toward a vehicle inner side during expansion and deployment.

### [Citation List]

### [Patent Literature]

[PTL 1] Japanese Translation of PCT Application No. 2006-513083

### [Summary of Invention]

### [Technical Problem]

However, with PTL 1, controlling a behavior of the side airbag during expansion and deployment requires changing a structure itself such as installing the side airbag device to a frame inside the seat back and installing the inflator in a rearmost region of the frame. From each of the documents JP 2004203272, US 2010/0295277 A1 and JP 2011073562 are known side airbag devices comprising a side airbag with a first and a second region in which the airbag in wounded in opposite directions.

In consideration of such problems, an object of the present invention is to provide a side airbag device which is capable of readily controlling a behavior of a side airbag during expansion and deployment.

### [Solution to Problem]

In order to solve the problem described above, a representative configuration of a side airbag device according to the present invention is a side airbag device comprising a side airbag which expands and deploys from a side part of a seat inside a vehicle when supplied with gas, and an inflator which supplies gas to the side airbag, wherein the side airbag is housed in a wound and elongated state inside the seat before expansion and development, and includes a first region and a second region, wherein the first region includes an earliest deploying part and a latest deploying part, wherein the second region is positioned between the earliest deploying part and the latest deploying part, wherein the side airbag is wound such that a winding direction is switched from the earliest deploying part to the second region winding to an opposite from periphery toward a center of folding, and then from the second region to the latest deploying part from the opposite direction to the original winding direction inside the earliest deploying part, and so that the side airbag in the housed state sequentially expands and develops from the periphery of the winding towards a center of the winding .

According to the configuration described above, when the side airbag is supplied with gas from the inflator and expands and deploys, since the first region and the second region have opposite winding directions, a deployment direction of the first region differs from a deployment direction of the second region. In this manner, with a simple configuration of changing winding directions midway through housing the side airbag, a behavior of the side airbag during expansion and deployment can be readily controlled.

Favorably, the side airbag in the housed state sequentially expands and deploys from a periphery of the winding, which is first supplied with gas from the inflator, toward a center of the winding, the first region includes an earliest deploying part, which is near the inflator and which expands and deploys first, in the side airbag, and a latest deploying part, which expands and deploys last, and the second region is positioned between the earliest deploying part and the latest deploying part.

Accordingly, when the side airbag expands and deploys: first, the earliest deploying part (the first region) near the inflator deploys in the second direction which is opposite to the first direction; next, the second region deploys in the first direction which is opposite to the second direction; and, finally, the latest deploying part (the first region) deploys in the same second direction as the earliest deploying part. In other words, according to the configuration described above, in the housed state of the side airbag, the winding direction is switched midway to the opposite direction and then returned to the original winding direction. Therefore, the behavior during deployment of the second region of the side airbag differs from the behaviors of the earliest deploying part and the latest deploying part constituting the first region, and the difference can be used to control the behavior of the entire side airbag.

Favorably, the side airbag expands and deploys between the seat and a side door of the vehicle, and in a cross section of the side airbag in the housed state as viewed from a side of a lower end, the first direction is a counterclockwise direction from the periphery toward the center of the winding when the seat is a left-side seat facing the front of the vehicle and a clockwise direction from the periphery toward the center of the winding when the seat is a right-side seat facing the front of the vehicle.

In this case, as the side airbag, a near side airbag which expands and deploys between the side door and the seat of the vehicle is assumed. Therefore, in a case where the seat is a left-side seat facing the front of the vehicle, when the side airbag expands and deploys: first, the earliest deploying part (the first region) near the inflator deploys clockwise; next, the second region deploys counterclockwise; and, finally, the latest deploying part (the first region) deploys clockwise. Accordingly, when the second region of the side airbag deploys counterclockwise, the second region can bypass a specific part (for example, a shoulder) of an occupant sitting on the seat. As a result, during expansion and deployment, the side airbag is prevented from being caught by the specific part of the occupant and deployment time can be reduced. In addition, since the latest deploying part (the first region) deploys clockwise after the deployment of the second region, the latest deploying part moves away from the seat and occurrences of a situation where the latest deploying part comes into contact with the head of the occupant can be reduced. Therefore, so-called chest deflection can be suppressed and occupant protection performance can be improved. On the other hand, in a case where the seat is a right-side seat facing the front of the vehicle, when the side airbag expands and deploys: first, the earliest deploying part near the inflator deploys counterclockwise; next, the second region deploys clockwise; and, finally, the latest deploying part deploys counterclockwise. Accordingly, when the second region of the side airbag deploys clockwise, the second region can bypass a specific part of an occupant sitting on the seat and, as a result, deployment time can be reduced and occupant protection performance can be improved.

Favorably, the side airbag expands and deploys on a vehicle-center side of the seat, and in a cross section of the side airbag in the housed state as viewed from a side of a lower end, the first direction is a clockwise direction from the periphery toward the center of the winding when the seat is a left-side seat facing the front of the vehicle and a counterclockwise direction from the periphery toward the center of the winding when the seat is a right-side seat facing the front of the vehicle.

In this case, as the side airbag, a far side airbag which expands and deploys on a center side of the vehicle is assumed. Therefore, in a case where the seat is a left-side seat facing the front of the vehicle, when the side airbag expands and deploys: first, the earliest deploying part deploys counterclockwise; next, the second region deploys clockwise; and, finally, the latest deploying part deploys counterclockwise. On the other hand, in a case where the seat is a right-side seat facing the front of the vehicle, when the side airbag expands and deploys: first, the earliest deploying part deploys clockwise; next, the second region deploys counterclockwise; and, finally, the latest deploying part deploys clockwise. Accordingly, when the second region of the side airbag deploys clockwise or counterclockwise, the second region can bypass a specific part of an occupant sitting on the seat and, as a result, deployment time can be reduced and occupant protection performance can be improved.

Favorably, the side airbag expands and deploys in a side surface part of the seat, and in a cross section of the side airbag in the housed state as viewed from a side of a lower end, the first direction is a counterclockwise direction from the periphery toward the center of the winding when the side airbag is installed on a left-side side surface of the seat facing the front of the vehicle and a clockwise direction from the periphery toward the center of the winding when the side airbag is installed on a right-side side surface of the seat facing the front of the vehicle.

In this case, it is assumed that the side airbag device is applied to a vehicle seat of a so-called ultra-small mobility designed to seat one to two or three occupants. An ultra-small mobility refers to a vehicle designed to seat one to two or three occupants which is smaller than an automobile and has better maneuverability, which exhibits superior environment performance, and which can be used as convenient means of transportation in the community. Therefore, in a case where the side airbag device is installed on a left-side side surface of the seat facing the front of the vehicle, when the side airbag expands and deploys: first, the earliest deploying part deploys clockwise; next, the second region deploys counterclockwise; and, finally, the latest deploying part deploys clockwise. On the other hand, in a case where the side airbag device is installed on a right-side side surface of the seat facing the front of the vehicle, when the side airbag expands and deploys: first, the earliest deploying part deploys counterclockwise; next, the second region deploys clockwise; and, finally, the latest deploying part deploys counterclockwise. Accordingly, when the second region of the side airbag deploys clockwise or counterclockwise, the second region can bypass a specific part of an occupant sitting on the seat and, as a result, deployment time can be reduced and occupant protection performance can be improved.

Favorably, the side airbag deploys in a fan shape centered on an upper end or a rear end of the side airbag in the housed state, and the housed state is created by winding the side airbag along fold lines which spread radially from a center. Accordingly, the side airbag is placed in the housed state by being wound along radially spreading fold lines. In the housed state, a shape of the side airbag is larger on a vehicle lower side than on a vehicle upper side and conforms to a shape of the seat. Therefore, the side airbag can be more readily housed inside the seat. In addition, during expansion and deployment, the side airbag sequentially deploys in a fan shape along radially spreading fold lines. As an example, the deployment of the side airbag from the seat toward the vehicle upper side or the vehicle front side enables the shoulder of the occupant to be more reliably bypassed.

Favorably, the second region is positioned in a vicinity of a shoulder of an occupant during expansion and deployment of the side airbag. Accordingly, by setting the winding direction of the second region, the second region can bypass the shoulder of the occupant during expansion and deployment of the side airbag.

Favorably, a start position where winding in the second direction is started in the second region is positioned on a vehicle outer side or a vehicle inner side with respect to the latest deploying part of the first region. When the start position of the second region is positioned on the vehicle outer side with respect to the latest deploying part of the first region, deployment of the second region can be started more quickly as compared to being positioned on the vehicle inner side. On the other hand, in order to delay the start of deployment of the second region, the start position of the second direction may be positioned on the vehicle inner side with respect to the latest deploying part. Therefore, a timing at which the deployment of the second region is started can be appropriately set in accordance with a size or a shape of the seat.

Favorably, the side airbag protects at least the head and the chest of an occupant during expansion and deployment. Accordingly, since the head and the chest can be protected while bypassing a shoulder of the occupant during expansion and deployment, occupant protection performance can be further improved.

### [Advantageous Effects of Invention]

According to the present invention, a side airbag device which is capable of readily controlling a behavior of a side airbag during expansion and deployment can be provided.

### [Brief Description of Drawings]

[Fig. 1]

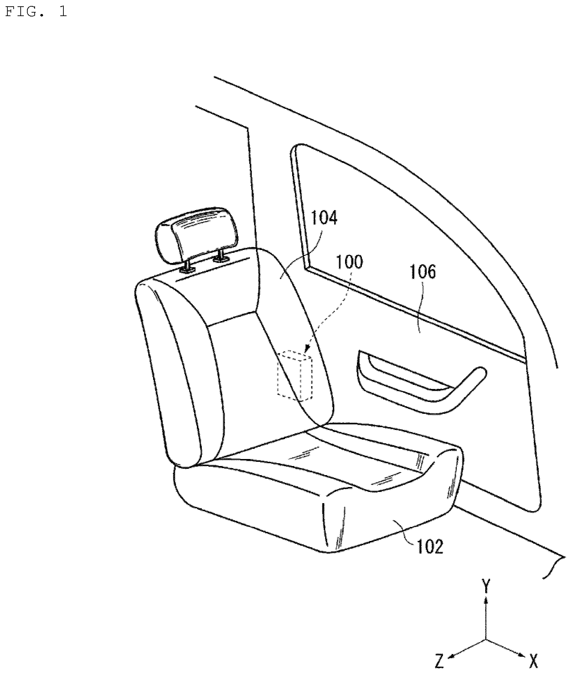

   Fig. 1 is a diagram schematically illustrating a side airbag device according to a first embodiment of the present invention.
[Fig. 2]

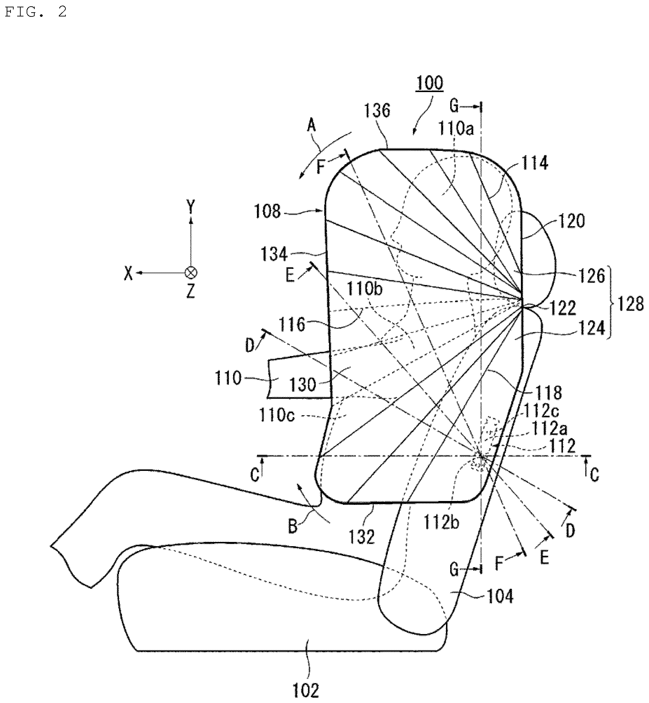

   Fig. 2 is a diagram illustrating a state where a side airbag device on a vehicle outer side of a seat back of a left-side vehicle seat when facing the front of the vehicle in Fig. 1 has expanded and deployed.
[Fig. 3]

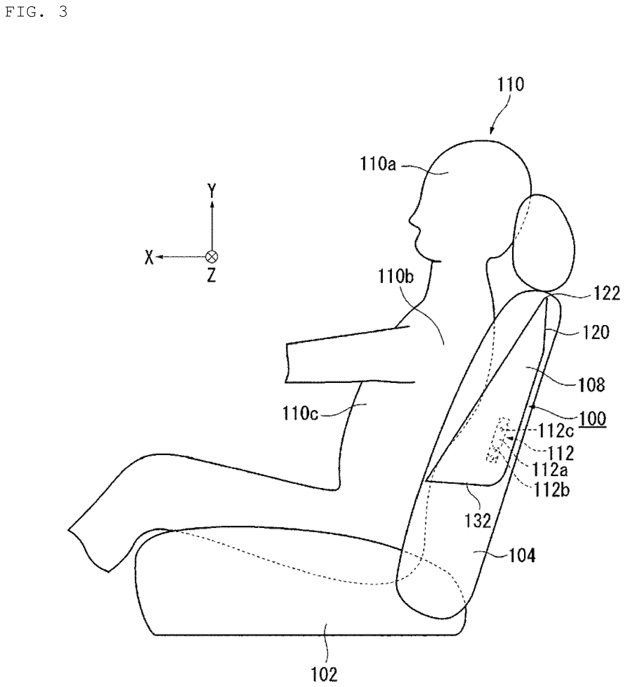

   Fig. 3 is a diagram illustrating a housed state of the side airbag shown in Fig. 2.
[Fig. 4]

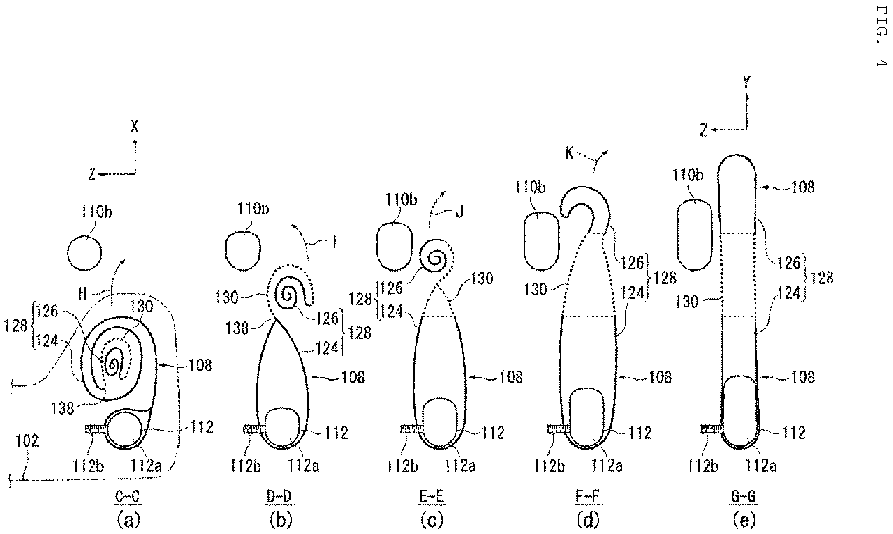

   Fig. 4 is a schematic sectional view illustrating a state where a side airbag installed on the vehicle outer side of the seat back of the left-side vehicle seat when facing the front of the vehicle in Fig. 3 expands and deploys.
[Fig. 5]

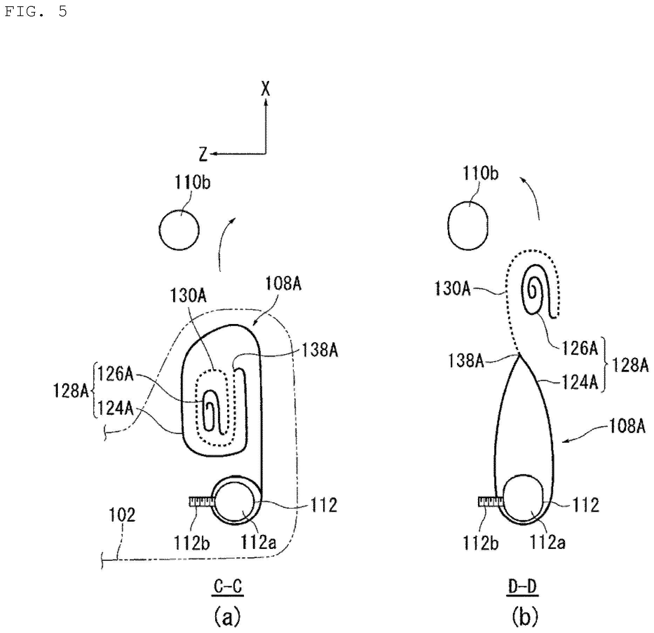

   Fig. 5 is a schematic sectional view partially illustrating a situation where another side airbag expands and deploys.
[Fig. 6]

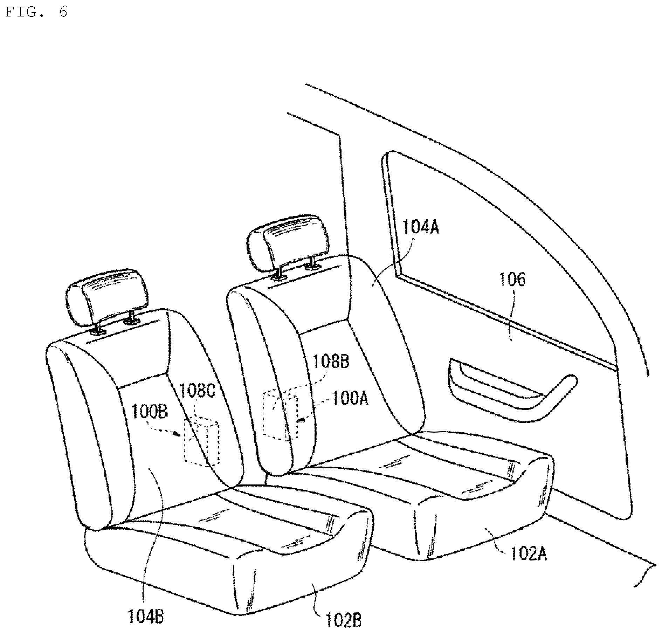

   Fig. 6 is a diagram schematically illustrating a side airbag device according to a second embodiment of the present invention.
[Fig. 7]

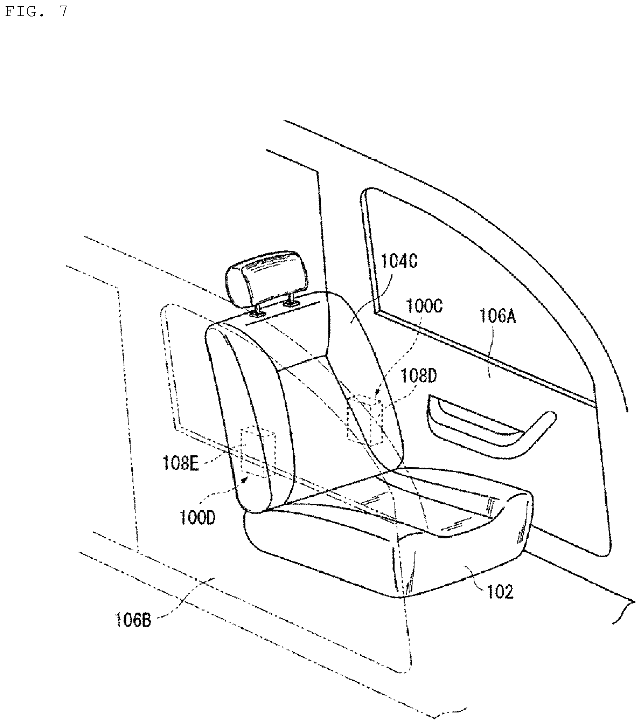

   Fig. 7 is a diagram schematically illustrating a side airbag device according to a third embodiment of the present invention.

### [Reference Signs List]

- 100, 100A, 100B, 100C, 100D: Side airbag device
- 102, 102A, 102B, 102C: Vehicle seat
- 104, 104A, 104B, 104C: Seat back
- 106, 106A, 106B: Side door
- 108, 108A, 108B, 108C, 108D, 108E: Side airbag
- 110: Occupant
- 110a: Head
- 110b: Shoulder
- 110c: Chest
- 112: Inflator
- 112a: Main body
- 112b,: 112cStud bolt
- 114, 116, 118: Fold line
- 120: Rear end
- 122: Point of reference
- 124, 124A: Earliest deploying part
- 126, 126A: Latest deploying part
- 128, 128A: First region
- 130, 130A: Second region
- 132: Lower end
- 134: Front end
- 136: Upper end
- 138, 138A: Start point

### [Description of Embodiments]

Hereinafter, preferred embodiments of the present invention will be described in detail with reference to the accompanying drawings. Dimensions, materials, specific numerical values, and the like described in the embodiments are simply examples provided in order to facilitate understanding of the present invention and are not intended to limit the invention unless otherwise noted. Moreover, for elements having functions or configurations which are substantially the same in the present specification and in the drawings, redundant descriptions will be omitted by denoting such elements with same reference signs. In addition, elements not directly related to the present invention will not be illustrated.

### (First embodiment)

Fig. 1 is a diagram schematically illustrating a side airbag device according to a first embodiment of the present invention. Hereinafter, arrows X, Y, and Z shown in the drawings respectively indicate a vehicle front side direction, a vehicle upper side direction, and a vehicle inner side direction. A side airbag device 100 is built into, for example, a seat back 104 of a vehicle seat 102 on a left side when facing the front of a vehicle which is to be used as a passenger seat of the vehicle. The side airbag device 100 includes a side airbag 108 (refer to Fig. 2) which is provided on a vehicle outer side of the seat back 104 and which expands and deploys so as to stand between the vehicle seat 102 and a side door 106.

Fig. 2 is a diagram illustrating a state where the side airbag device 100 on the vehicle outer side of the seat back 104 of the left-side vehicle seat 102 when facing the front of the vehicle in Fig. 1 has expanded and deployed. Fig. 3 is a diagram illustrating a housed state of the side airbag 108 shown in Fig. 2. The drawings show a situation where an occupant 110 is sitting on the vehicle seat 102 with the side airbag device 100 as viewed from a side of the vehicle. Note that a left side in the drawings is a vehicle front side and a front side in the drawings is a vehicle outer side.

For example, the side airbag 108 is formed in a bag shape by a method of sewing from a total of two sheets of base fabric constituting front and back surfaces or by a method of weaving using OPW (One-Piece Woven). In addition, the side airbag device 100 includes an inflator 112 which supplies the side airbag 108 with gas for expansion and deployment. The inflator 112 is a gas generation apparatus and is configured to generate and supply gas as a gas generating agent inside the inflator 112 burns. Furthermore, the inflator 112 has a cylindrical shape and is fixed to the seat back 104 by stud bolts 112b and 112c which protrude from a main body 112a.

The side airbag 108 expands and deploys using gas supplied from the inflator 112 and, as shown in Fig. 2, protects the head 110a, a shoulder 110b, the chest 110c, and the like of the occupant 110. In this case, the side airbag 108 includes a plurality of fold lines 114, 116, and 118. The fold lines 114, 116, and 118 spread radially from a point of reference 122 which is positioned at a rear end 120 of the side airbag 108 and which is on a vehicle upper side of the inflator 112. Note that the drawings respectively illustrate six fold lines 114 depicted by solid lines, three fold lines 116 depicted by dotted lines, and three fold lines 118 depicted by solid lines.

The side airbag 108 is sequentially wound as indicated by an arrow A along the fold lines 114, 116, and 118 to assume a housed state illustrated in Fig. 3. In the housed state, a shape of the side airbag 108 in a vehicle longitudinal direction is larger on a vehicle lower side than on a vehicle upper side. Therefore, the side airbag 108 in the housed state conforms to a shape of the seat back 104 and may be more readily housed inside the seat back 104.

On the other hand, when gas is supplied from the inflator 112 during expansion and deployment, the side airbag 108 sequentially deploys in a fan shape as indicated by an arrow B in an order of: first, along the fold lines 118; next, along the fold lines 116; and, finally, along the fold lines 114.

In other words, in the side airbag 108, a region which includes the fold lines 118 and which is near the inflator 112 expands and deploys first. Hereinafter, this region will be referred to as an earliest deploying part 124. In addition, in the side airbag 108, a region which includes the fold lines 114 expands and deploys last. Hereinafter, this region will be referred to as a latest deploying part 126. Furthermore, a region including the earliest deploying part 124 and the latest deploying part 126 will be hereinafter referred to as a first region 128.

In addition, in the side airbag 108, a region which is positioned between the earliest deploying part 124 and the latest deploying part 126 and which includes the fold lines 116 will be hereinafter referred to as a second region 130. Due to the side airbag 108 expanding and deploying in an order of the earliest deploying part 124, the second region 130, and the latest deploying part 126, a lower end 132 appears first, a front end 134 appears next, and an upper end 136 appears last to create an deployed state shown in Fig. 2.

Fig. 4 is a schematic sectional view illustrating a state where the side airbag 108 installed on the vehicle outer side of the seat back 104 of the left-side vehicle seat 102 when facing the front of the vehicle in Fig. 3 expands and deploys. Hereinafter, in Figs. 4(a) to 4(e), a shoulder 110b exemplifies a specific part of the occupant 110. First, Fig. 4(a) is a sectional view taken along C-C in Fig. 2 and illustrates a cross section of the side airbag 108 in a housed state on an X-Z plane as viewed from a side of the lower end 132. In addition, the cross section shown in Fig. 4(a) illustrates a housed state or an initial state of expansion and deployment of the side airbag 108. Furthermore, in Fig. 4(a), by depicting an outer shape of the vehicle seat 102 with a dotted line, a positional relationship between the vehicle seat 102 and the side airbag 108 when the side airbag 108 is viewed from the side of the lower end 132 is clearly shown.

Next, Fig. 4(b) is a sectional view taken along D-D in Fig. 2 and illustrates the side airbag 108 after the initial state shown in Fig. 4(a). Figs. 4(c), 4(d), and 4(e) respectively illustrate sectional views taken along E-E, F-F, and G-G in Fig. 2 and illustrate how the side airbag 108 expands and deploys with time by a cross section which sequentially inclines in an order of Fig. 4(c), Fig. 4(d), and Fig. 4(e) after the state shown in Fig. 4(b). Note that the cross section taken along G-G shown in Fig. 4(e) is a cross section on a Y-Z plane as illustrated and shows a state where the expansion and deployment of the side airbag 108 have been completed.

As shown in Fig. 4(a), a winding direction of the side airbag 108 in the housed state differs between the first region 128 and the second region 130. Specifically, the earliest deploying part 124 and the latest deploying part 126 of the first region 128 are wound in a first direction (in this case, a counterclockwise direction) in a cross section of the side airbag 108 as viewed from the lower end 132.

The second region 130 is wound in a second direction (in this case, a clockwise direction) in the same cross section of the side airbag 108 as viewed from the lower end 132. In other words, in the housed state, the side airbag 108 is wound such that a winding direction is switched midway to an opposite direction and then returned to the original winding direction. In the drawings, a start point at which the winding in the second direction in the second region 130 is started is indicated by a start point 138. As shown in Fig. 4(a), the start point 138 is positioned on a vehicle inner side of the latest deploying part 126.

In the side airbag 108, by reversing winding directions in the first region 128 and the second region 130, a deployment direction of the first region 128 and a deployment direction of the second region 130 are differentiated. Hereinafter, a specific description will be given.

When the side airbag 108 expands and deploys, first, the earliest deploying part 124 of the first region 128 near the inflator 112 deploys clockwise (refer to arrow H) as shown in Fig. 4(a). Next, as shown in Fig. 4(b), the earliest deploying part 124 expands and the start point 138 described above appears. Subsequently, as shown in Fig. 4(b), the second region 130 deploys counterclockwise (refer to arrow I).

Since the second region 130 deploys counterclockwise in this manner, the side airbag 108 can bypass a specific part such as the shoulder 110b of the occupant 102 sitting on the vehicle seat 102. Therefore, a time required by the side airbag 108 to deploy can be reduced while preventing the side airbag 108 from getting caught by the shoulder 110b of the occupant 110 during expansion and deployment.

Next, as the second region 130 deploys, the latest deploying part 126 deploys clockwise (refer to arrow J) as shown in Fig. 4(c). Subsequently, the latest deploying part 126 deploys while rubbing against an outer side of the shoulder 110b of the occupant 110 and deploys clockwise (refer to arrow K) as shown in Fig. 4(d). Accordingly, the latest deploying part 126 moves away from the vehicle seat 102 toward the vehicle outer side and becomes less likely to come into contact with the head 110a (refer to Fig. 2) of the occupant 110. Therefore, so-called chest deflection can be suppressed and occupant protection performance can be improved. Chest deflection refers to a deflection of the sternum which occurs when a concentrated load is applied to the sternum.

Finally, the latest deploying part 126 also completely deploys as shown in Fig. 4(e) to complete the expansion and deployment of the side airbag 108. In this case, as shown in Fig. 4(e), the second region 130 is positioned near the shoulder 110b of the occupant 110 during the expansion and deployment of the side airbag 108. Therefore, by setting the winding direction of the second region 130 to the second direction, the second region 130 can bypass the shoulder 110b of the occupant 110 during expansion and deployment of the side airbag 108. In addition, as illustrated in Fig. 4, the deployment of the side airbag 108 from the vehicle seat 102 toward the vehicle upper side enables the shoulder 110b of the occupant 110 to be more reliably bypassed.

Fig. 5 is a schematic sectional view partially illustrating a situation where another side airbag 108A expands and deploys. Figs. 5(a) and 5(b) are cross sections taken along C-C and D-D which respectively correspond to Figs. 4(a) and 4(b) in the side airbag 108 described above and which illustrate an initial state of expansion and deployment. An outer shape of the vehicle seat 102 is depicted by a dotted line in Fig. 5(a).

With the side airbag 108A, as shown in Fig. 5(a), a start point 138A which is a start position where winding in the second direction in a second region 130A is started is positioned on a vehicle outer side of a latest deploying part 126A of a first region 128A. Positioning the start point 138A on the vehicle outer side with respect to the latest deploying part 126A of the first region 128A enables deployment of the second region 130A to be started more quickly as compared to being positioned on a vehicle inner side. Note that, after the state shown in Fig. 5(b), the side airbag 108A subsequently deploys in a similar manner to the states shown in Figs. 4(c), 4(d), and 4(e).

Meanwhile, the start point 138 of the side airbag 108 described earlier is positioned on the vehicle inner side of the latest deploying part 126 of the first region 128 (refer to Fig. 4(a)). Therefore, in the side airbag 108, the number of times the earliest deploying part 124 is folded along the fold lines is larger than that of the earliest deploying part 124A. Accordingly, in the side airbag 108, the time required from the start of expansion and deployment of the earliest deploying part 124 to the appearance of the start point 138 on a surface as shown in Fig. 4(b) is longer than the time required by the start point 138A of the side airbag 108A to appear on the surface. As a result, the second region 130 deploys slower in the side airbag 108 as compared to the side airbag 108A. However, this can be rephrased as: in order to delay the start of deployment of the second region 130, the start point 138 may be positioned on the vehicle inner side with respect to the latest deploying part 126.

Therefore, according to the present embodiment, by setting the position of the start points 138 and 138A on the vehicle inner side or the vehicle outer side with respect to the latest deploying parts 126 and 126A, a timing at which the deployment of the second region 130 and 130A is started can be appropriately set in accordance with a size or a shape of the vehicle seat 102.

In the present embodiment, during the expansion and deployment of the side airbags 108 and 108A, by reversing winding directions in the first regions 128 and 128A and the second regions 130 and 130A, a deployment direction of the first regions 128 and 128A and a deployment direction of the second region 130 and 130A are differentiated. Therefore, according to the present embodiment, with a simple configuration of changing winding directions midway through housing the side airbags 108 and 108A, the behavior of the side airbags 108 and 108A during expansion and deployment can be readily controlled.

In addition, while the side airbag 108 in the housed state deploys in a fan shape around the point of reference 122 positioned at the rear end 120 in the embodiment described above, the position of the point of reference 122 is not limited thereto. For example, a point of reference may be set near the upper end 136 of the side airbag 108, a plurality of fold lines which spread radially from the point of reference may be set, and a housed state may be created by changing a winding direction midway and then returning to the original winding direction.

Furthermore, in the embodiment described above, while the first direction and the second direction are respectively defined in a cross section taken along C-C of the side airbag 108 in the housed state as viewed from the lower end 132, the first direction and the second direction are not limited thereto. For example, when the side airbag 108 is arranged such that a longitudinal direction of the housed state of the side airbag 108 is more inclined, the first direction and the second direction may be respectively defined in a cross section of the side airbag 108 as viewed from the front end 134.

In addition, as described above, the side airbag 108 in the housed state sequentially expands and deploys from a periphery of a winding which is supplied with gas first from the inflator 112 toward a center of the winding. Therefore, in a cross section of the side airbag 108 in the housed state as viewed from the lower end 132 or the front end 134, the first direction is a counterclockwise direction from the periphery toward the center of the winding in the case of the vehicle seat 102 positioned on the vehicle left side and a clockwise direction from the periphery toward the center of the winding in the case of a vehicle seat on the vehicle right side.

Furthermore, while the side airbag device 100 installed in the vehicle seat 102 positioned on a left side when facing the front of the vehicle has been discussed in the embodiment described above, the side airbag device 100 may be installed in a vehicle seat on a right side when facing the front of the vehicle which is used as a driver's seat of the vehicle. However, in this case, a position of an occupant sitting on a vehicle seat as viewed from the side airbag device 100 becomes a vehicle left side. Therefore, when installing the side airbag device 100 on a right-side vehicle seat facing the front of the vehicle, the winding direction of the side airbag 108 may be reversed from the winding direction described above. Accordingly, a deployment behavior with respect to an occupant can be controlled in a similar manner to the deployment behavior described above.

Therefore, even when the side airbag device 100 is installed in a vehicle seat on a right side when facing the front of the vehicle, the side airbag 108 can be prevented from getting caught by the shoulder of an occupant during expansion and deployment and a deployment time of the side airbag 108 can be reduced and, since the side airbag 108 is less likely to come into contact with the head of the occupant, occupant protection performance can be improved.

Furthermore, in the side airbag device 100 according to the embodiment described above, while a near side airbag which expands and deploys between the vehicle seat 102 and the side door 106 is assumed as the side airbag 108, the side airbag 108 is not limited thereto. Hereinafter, a description will be given with reference to Figs. 6 and 7.

### (Second embodiment)

Fig. 6 is a diagram schematically illustrating side airbag devices 100A and 100B according to a second embodiment of the present invention. In this case, as side airbags 108B and 108C used by the side airbag devices 100A and 100B, a far side airbag which expands and deploys on a center side of the vehicle is assumed.

The side airbag device 100A is built into a seat back 104A of a vehicle seat 102A on a left side facing the front of a vehicle. In this case, in the side airbag 108B of the side airbag device 100A, a first direction is a clockwise direction from a periphery toward a center of a winding in a cross section of the side airbag 108B in a housed state as viewed from a lower end side.

Therefore, when the side airbag 108B expands and deploys: first, an earliest deploying part of a first region deploys counterclockwise; next, a second region deploys clockwise; and, finally, a latest deploying part of the first region deploys counterclockwise. Note that, in the second embodiment, a distinction between the earliest deploying part and the latest deploying part of the first region and the second region is similar to that of the first embodiment and will not be illustrated.

The side airbag device 100B is built into a seat back 104B of a vehicle seat 102B on a right side facing the front of the vehicle. In this case, in the side airbag 108C of the side airbag device 100B, the first direction is a counterclockwise direction from a periphery toward a center of a winding in a cross section of the side airbag 108C in the housed state as viewed from a lower end side.

Therefore, when the side airbag 108C expands and deploys: first, an earliest deploying part of a first region deploys clockwise; next, a second region deploys counterclockwise; and, finally, a latest deploying part of the first region deploys clockwise.

As a result, according to the side airbag devices 100A and 100B, when the second regions of the side airbags 108B and 108C as far side airbags deploy clockwise or counterclockwise, the second regions can bypass a specific part such as a shoulder of an occupant sitting on the vehicle seats 102A and 102B and, as a result, deployment time can be reduced and occupant protection performance can be improved.

### (Third embodiment)

Fig. 7 is a diagram schematically illustrating side airbag devices 100C and 100D according to a third embodiment of the present invention. In this case, it is assumed that the side airbag devices 100C and 100D are applied to a vehicle seat 102C of a so-called ultra-small mobility. An ultra-small mobility refers to a vehicle designed to seat one to two or three occupants which is smaller than an automobile and has better maneuverability, which exhibits superior environment performance, and which may be used as convenient means of transportation in the community. In an ultra-small mobility, since at least a driver's seat is designed to seat one occupant, a side door 106A is positioned on a left side of the vehicle seat 102C facing the front of the vehicle and a side door 106B depicted by a dashed line in Fig. 7 is positioned on a right side of the vehicle seat 102C.

In a seat back 104C of the vehicle seat 102C, the side airbag device 100C is built into a left-side side surface of the vehicle seat 102C facing the front of the vehicle. In this case, in a side airbag 108D of the side airbag device 100C, a first direction is a counterclockwise direction from a periphery toward a center of a winding in a cross section of the side airbag 108D in a housed state as viewed from a lower end side.

Therefore, when the side airbag 108D expands and deploys: first, an earliest deploying part deploys clockwise; next, a second region deploys counterclockwise; and, finally, a latest deploying part deploys clockwise. Note that, in the third embodiment, a distinction between the earliest deploying part and the latest deploying part of a first region and the second region is similar to that of the first embodiment and will not be illustrated.

In the seat back 104C of the vehicle seat 102C, the side airbag device 100D is built into a right-side side surface of the vehicle seat 102C facing the front of the vehicle. In this case, in the side airbag 108E of the side airbag device 100D, a first direction is a clockwise direction from a periphery toward a center of a winding in a cross section of the side airbag 108E in a housed state as viewed from a lower end side.

Therefore, when the side airbag 108E expands and deploys: first, an earliest deploying part deploys counterclockwise; next, a second region deploys clockwise; and, finally, a latest deploying part deploys counterclockwise.

As a result, according to the side airbag devices 100C and 100D applied to a single-seat ultra-small mobility, when the second regions of the side airbags 108D and 108E deploy clockwise or counterclockwise, the second regions can bypass a specific part such as a shoulder of an occupant sitting on the vehicle seat 102C and, as a result, deployment time can be reduced and occupant protection performance can be improved.

Although preferred embodiments of the present invention have been described above with reference to the accompanying drawings, it is needless to say that the present invention is not limited to the examples.

In addition, while an example in which the side airbag device according to the present invention is applied to an automobile has been described in the embodiment presented above, the side airbag device according to the present invention can also be applied to an aircraft, a ship, and the like to produce similar working effects.

### [Industrial Applicability]

The present invention can be utilized in a side airbag device including a side airbag which expands and deploys between a seat and a side door in an event of a side collision or a rollover of a vehicle.

## Claims

1. A side airbag device (100, 100A, 100B, 100C, 100D) comprising a side airbag (108, 108A, 108B, 108C, 108D, 108E) which expands and deploys from a side part of a seat (102, 102A, 102B, 102C) inside a vehicle when supplied with gas, and an inflator (112) which supplies gas to the side airbag (108, 108A, 108B, 108C, 108D, 108E), wherein
the side airbag (108, 108A, 108B, 108C, 108D, 108E) is housed in a wound and elongated state inside the seat (102, 102A, 102B, 102C) before expansion and development, and includes a first region (128, 128A) and a second region (130,130A), wherein the first region (128,128A) includes an earliest deploying part (124,124A) and a latest deploying part (126,126A), wherein the second region (130,130A) is positioned between the earliest deploying part (124,124A) and the latest deploying part (126,126A), wherein the side airbag (108, 108A, 108B, 108C, 108D, 108E) is wound such that a winding direction is switched from the earliest deploying part (124,124A) to the second region (130, 130A) winding to an opposite direction from periphery toward a center of folding, and then from the second region (130, 130A) to the latest deploying part (126,126A) from the opposite direction to the original winding direction inside the earliest deploying part (124,124A), and so that the side airbag (108, 108A, 108B, 108C, 108D, 108E) in the housed state sequentially expands and develops from the periphery of the winding towards a center of the winding.

2. The side airbag device (100, 100A, 100B, 100C, 100D) according to claim 1, wherein
the side airbag (108, 108A, 108B, 108C, 108D, 108E) expands and deploys between the seat (102, 102A, 102B, 102C) and a side door (106, 106A, 106B) of the vehicle, and
in a cross section of the side airbag (108, 108A, 108B, 108C, 108D, 108E) in the housed state as viewed from a side of a lower end (132), the first direction is a counterclockwise direction from the periphery toward the center of the winding when the seat (102, 102A, 102B, 102C) is a left-side seat facing the front of the vehicle and a clockwise direction from the periphery toward the center of the winding when the seat (102, 102A, 102B, 102C) is a right-side seat facing the front of the vehicle.

3. The side airbag device (100, 100A, 100B, 100C, 100D) according to claim 1, wherein
the side airbag (108, 108A, 108B, 108C, 108D, 108E) expands and deploys on a vehicle-center side of the seat (102, 102A, 102B, 102C), and
in a cross section of the side airbag (108, 108A, 108B, 108C, 108D, 108E) in the housed state as viewed from a side of a lower end (132), the first direction is a clockwise direction from the periphery toward the center of the winding when the seat (102, 102A, 102B, 102C) is a left-side seat facing the front of the vehicle and a counterclockwise direction from the periphery toward the center of the winding when the seat (102, 102A, 102B, 102C) is a right-side seat facing the front of the vehicle.

4. The side airbag device (100, 100A, 100B, 100C, 10D) according to claim 1, wherein
the side airbag (108, 108A, 108B, 108C, 108D, 108E) expands and deploys in a side surface part of the seat (102, 102A, 102B, 102C), and
in a cross section of the side airbag (108, 108A, 108B, 108C, 108D, 108E) in the housed state as viewed from a side of a lower end (132), the first direction is a counterclockwise direction from the periphery toward the center of the winding when the side airbag (108, 108A, 108B, 108C, 108D, 108E) is installed on a left-side side surface of the seat (102, 102A, 102B, 102C) facing the front of the vehicle and a clockwise direction from the periphery toward the center of the winding when the side airbag (108, 108A, 108B, 108C, 108D, 108E) is installed on a right-side side surface of the seat (102, 102A, 102B, 102C) facing the front of the vehicle.

5. The side airbag device (100, 100A, 100B, 100C, 100D) according to any one of claims 1 to 4, wherein the side airbag (108, 108A, 108B, 108C, 108D, 108E) deploys in a fan shape centered on an upper end or a rear end of the side airbag (108, 108A, 108B, 108C, 108D, 108E) in the housed state, and the housed state is created by winding the side airbag (108, 108A, 108B, 108C, 108D, 108E) along fold lines (114, 116, 118) which spread radially from the center.

6. The side airbag device (100, 100A, 100B, 100C, 100D) according to any one of claims 1 to 5, wherein the second region (130, 130A) is positioned in a vicinity of a shoulder (110b) of an occupant (100) during expansion and deployment of the side airbag (108, 108A, 108B, 108C, 108D, 108E).

7. The side airbag device (100, 100A, 100B, 100C, 100D) according to any one of claims 1 to 6, wherein a start position, where winding in the second direction is started in the second region (130, 130A), is positioned on a vehicle outer side or a vehicle inner side with respect to the latest deploying part (126, 126A) of the first region (128, 128A).

8. The side airbag device (100, 100A, 100B, 100C, 100D) according to any one of claims 1 to 7, wherein the side airbag (108, 108A, 108B, 108C, 108D, 108E) protects at least the head (110a) and the chest (110c) of an occupant (110) during expansion and deployment.

## Patentansprüche

1. Seitenairbagvorrichtung (100, 100A, 100B, 100C, 100D), die einen Seitenairbag (108, 108A, 108B, 108C, 108D, 108E), der sich von einem Seitenteil eines Sitzes (102, 102A, 102B, 102C) in einem Fahrzeug aus ausdehnt und entfaltet, wenn ihm Gas zugeleitet wird, und einen Gasgenerator (112) umfasst, der dem Seitenairbag (108, 108A, 108B, 108C, 108D, 108E) Gas zuleitet, wobei
der Seitenairbag (108, 108A, 108B, 108C, 108D, 108E) in einem gewickelten und länglichen Zustand vor der Ausdehnung und Auffaltung in dem Sitz (102, 102A, 102B, 102C) untergebracht ist und einen ersten Bereich (128, 128A) und einen zweiten Bereich (130, 130A) aufweist, wobei der erste Bereich (128, 128A) einen sich zuerst entfaltenden Teil (124, 124A) und einen sich zuletzt entfaltenden Teil (126, 126A) aufweist, wobei der zweite Bereich (130, 130A) zwischen dem sich zuerst entfaltenden Teil (124, 124A) und dem sich zuletzt entfaltenden Teil (126, 126A) platziert ist, wobei der Seitenairbag (108, 108A, 108B, 108C, 108D, 108E) derart gewickelt ist, dass eine Wickelrichtung von der Wicklung des sich zuerst entfaltenden Teils (124, 124A) zum zweiten Bereich (130, 130A) in eine entgegengesetzte Richtung vom Rand in eine Faltmitte wechselt und anschließend vom zweiten Bereich (130, 130A) aus zum sich zuletzt entfaltenden Teil (126, 126A) von der entgegengesetzten Richtung in die ursprüngliche Wickelrichtung im sich zuerst entfaltenden Teil (124, 124A) und so, dass sich der Seitenairbag (108, 108A, 108B, 108C, 108D, 108E) im untergebrachten Zustand vom Wickelrand zu einer Wickelmitte hin nacheinander ausdehnt und auffaltet.

2. Seitenairbagvorrichtung (100, 100A, 100B, 100C, 100D) nach Anspruch 1, wobei
sich der Seitenairbag (108, 108A, 108B, 108C, 108D, 108E) zwischen dem Sitz (102, 102A, 102B, 102C) und einer Seitentür (106, 106A, 106B) des Fahrzeugs ausdehnt und entfaltet, und
in einem Querschnitt des Seitenairbags (108, 108A, 108B, 108C, 108D, 108E) im untergebrachten Zustand, von einer Seite eines unteren Endes (132) aus betrachtet, die erste Richtung eine Richtung entgegen der Uhrzeigerrichtung vom Wickelrand zur Wickelmitte ist, wenn der Sitz (102, 102A, 102B, 102C) in Blickrichtung zur Fahrzeugfront hin ein Sitz auf der linken Seite ist, und eine Uhrzeigerrichtung vom Wickelrand zur Wickelmitte, wenn der Sitz (102, 102A, 102B, 102C) in Blickrichtung zur Fahrzeugfront hin ein Sitz auf der rechten Seite ist.

3. Seitenairbagvorrichtung (100, 100A, 100B, 100C, 100D) nach Anspruch 1, wobei
sich der Seitenairbag (108, 108A, 108B, 108C, 108D, 108E) an einer fahrzeugmittigen Seite des Sitzes (102, 102A, 102B, 102C) ausdehnt und entfaltet, und
in einem Querschnitt des Seitenairbags (108, 108A, 108B, 108C, 108D, 108E) im untergebrachten Zustand, von einer Seite eines unteren Endes (132) aus betrachtet, die erste Richtung eine Uhrzeigerrichtung vom Wickelrand zur Wickelmitte ist, wenn der Sitz (102, 102A, 102B, 102C) in Blickrichtung zur Fahrzeugfront hin ein Sitz auf der linken Seite ist, und eine Richtung entgegen der Uhrzeigerrichtung vom Wickelrand zur Wickelmitte, wenn der Sitz (102, 102A, 102B, 102C) in Blickrichtung zur Fahrzeugfront hin ein Sitz auf der rechten Seite ist.

4. Seitenairbagvorrichtung (100, 100A, 100B, 100C, 10D) nach Anspruch 1, wobei
sich der Seitenairbag (108, 108A, 108B, 108C, 108D, 108E) in einem seitenflächigen Teil des Sitzes (102, 102A, 102B, 102C) ausdehnt und entfaltet, und
in einem Querschnitt des Seitenairbags (108, 108A, 108B, 108C, 108D, 108E) im untergebrachten Zustand, von einer Seite eines unteren Endes (132) aus betrachtet, die erste Richtung eine Richtung entgegen der Uhrzeigerrichtung vom Wickelrand zur Wickelmitte ist, wenn der Seitenairbag (108, 108A, 108B, 108C, 108D, 108E) in Blickrichtung zur Fahrzeugfront hin an einer linksseitigen Seitenfläche des Sitzes (102, 102A, 102B, 102C) angebaut ist, und eine Uhrzeigerrichtung vom Wickelrand zur Wickelmitte, wenn der Seitenairbag (108, 108A, 108B, 108C, 108D, 108E) in Blickrichtung zur Fahrzeugfront hin an einer rechtsseitigen Seitenfläche des Sitzes (102, 102A, 102B, 102C) angebaut ist.

5. Seitenairbagvorrichtung (100, 100A, 100B, 100C, 100D) nach einem der Ansprüche 1 bis 4, wobei sich der Seitenairbag (108, 108A, 108B, 108C, 108D, 108E) fächerförmig entfaltet, zentriert an einem oberen Ende oder einem hinteren Ende des Seitenairbags (108, 108A, 108B, 108C, 108D, 108E) im untergebrachten Zustand, und der untergebrachte Zustand dadurch erzeugt wird, dass der Seitenairbag (108, 108A, 108B, 108C, 108D, 108E) Faltlinien (114, 116, 118) entlang gewickelt wird, die sich von der Mitte aus radial ausbreiten.

6. Seitenairbagvorrichtung (100, 100A, 100B, 100C, 100D) nach einem der Ansprüche 1 bis 5, wobei sich der zweite Bereich (130, 130A) während der Ausdehnung und Entfaltung des Seitenairbags (108, 108A, 108B, 108C, 108D, 108E) in der Nähe einer Schulter (110b) eines Insassen (100) befindet.

7. Seitenairbagvorrichtung (100, 100A, 100B, 100C, 100D) nach einem der Ansprüche 1 bis 6, wobei sich eine Ausgangsstellung, in der mit dem Wickeln in der zweiten Richtung im zweiten Bereich (130, 130A) begonnen wird, bezogen auf den sich zuletzt entfaltenden Teil (126, 126A) des ersten Bereichs (128, 128A) auf einer Fahrzeugaußenseite oder einer Fahrzeuginnenseite befindet.

8. Seitenairbagvorrichtung (100, 100A, 100B, 100C, 100D) nach einem der Ansprüche 1 bis 7, wobei der Seitenairbag (108, 108A, 108B, 108C, 108D, 108E) zumindest den Kopf (110a) und die Brust (110c) eines Insassen (110) während der Ausdehnung und Entfaltung schützt.

## Revendications

1. Dispositif de coussin gonflable latéral (100, 100A, 100B, 100C, 100D) comprenant un coussin gonflable latéral (108, 108A, 108B, 108C, 108D, 108E) qui se gonfle et se déploie depuis une partie latérale d'un siège (102, 102A, 102B, 102C) à l'intérieur d'un véhicule quand il est alimenté en gaz, et un gonfleur (112) qui alimente du gaz dans le coussin gonflable latéral (108, 108A, 108B, 108C, 108D, 108E), dans lequel
le coussin gonflable latéral (108, 108A, 108B, 108C, 108D, 108E) est logé dans un état enroulé et allongé à l'intérieur du siège (102, 102A, 102B, 102C) avant le gonflement et le développement, et comporte une première zone (128, 128A) et une seconde zone (130, 130A), la première zone (128, 128A) comportant une partie se déployant en premier (124, 124A) et une partie se déployant en dernier (126, 126A), la seconde zone (130, 130A) étant placée entre la partie se déployant en premier (124, 124A) et la partie se déployant en dernier (126, 126A), le coussin gonflable latéral (108, 108A, 108B, 108C, 108D, 108E) étant enroulé de telle sorte qu'une direction d'enroulement change de l'enroulement de la partie se déployant en premier (124, 124A) à la seconde zone (130, 130A) dans une direction opposée de la périphérie à un centre de pliage, puis de la seconde zone (130, 130A) à la partie se déployant en dernier (126, 126A) de la direction opposée à la direction d'enroulement d'origine à l'intérieur de la partie se déployant en premier (124, 124A), et de telle sorte que le coussin gonflable latéral (108, 108A, 108B, 108C, 108D, 108E), dans l'état logé, se gonfle et se développe de manière séquentielle depuis la périphérie de l'enroulement vers un centre de l'enroulement.

2. Dispositif de coussin gonflable latéral (100, 100A, 100B, 100C, 100D) selon la revendication 1, dans lequel
le coussin gonflable latéral (108, 108A, 108B, 108C, 108D, 108E) se gonfle et se déploie entre le siège (102, 102A, 102B, 102C) et une portière latérale (106, 106A, 106B) du véhicule, et
dans une coupe transversale du coussin gonflable latéral (108, 108A, 108B, 108C, 108D, 108E) dans l'état logé, vue depuis un côté d'une extrémité inférieure (132), la première direction est une direction antihoraire de la périphérie au centre de l'enroulement quand le siège (102, 102A, 102B, 102C) est un siège côté gauche quand on regarde vers l'avant du véhicule et une direction horaire de la périphérie au centre de l'enroulement quand le siège (102, 102A, 102B, 102C) est un siège côté droit quand on regarde vers l'avant du véhicule.

3. Dispositif de coussin gonflable latéral (100, 100A, 100B, 100C, 100D) selon la revendication 1, dans lequel
le coussin gonflable latéral (108, 108A, 108B, 108C, 108D, 108E) se gonfle et se déploie sur un côté centre du véhicule du siège (102, 102A, 102B, 102C), et
dans une coupe transversale du coussin gonflable latéral (108, 108A, 108B, 108C, 108D, 108E) dans l'état logé, vue depuis un côté d'une extrémité inférieure (132), la première direction est une direction horaire de la périphérie au centre de l'enroulement quand le siège (102, 102A, 102B, 102C) est un siège côté gauche quand on regarde vers l'avant du véhicule et une direction antihoraire de la périphérie au centre de l'enroulement quand le siège (102, 102A, 102B, 102C) est un siège côté droit quand on regarde vers l'avant du véhicule.

4. Dispositif de coussin gonflable latéral (100, 100A, 100B, 100C, 10D) selon la revendication 1, dans lequel
le coussin gonflable latéral (108, 108A, 108B, 108C, 108D, 108E) se gonfle et se déploie dans une partie de surface latérale du siège (102, 102A, 102B, 102C), et
dans une coupe transversale du coussin gonflable latéral (108, 108A, 108B, 108C, 108D, 108E) dans l'état logé, vue depuis un côté d'une extrémité inférieure (132), la première direction est une direction antihoraire de la périphérie au centre de l'enroulement quand le coussin gonflable latéral (108, 108A, 108B, 108C, 108D, 108E) est installé sur une surface latérale côté gauche du siège (102, 102A, 102B, 102C) quand on regarde vers l'avant du véhicule et une direction horaire de la périphérie au centre de l'enroulement quand le coussin gonflable latéral (108, 108A, 108B, 108C, 108D, 108E) est installé sur une surface latérale côté droit du siège (102, 102A, 102B, 102C) quand on regarde vers l'avant du véhicule.

5. Dispositif de coussin gonflable latéral (100, 100A, 100B, 100C, 100D) selon l'une quelconque des revendications 1 à 4, dans lequel le coussin gonflable latéral (108, 108A, 108B, 108C, 108D, 108E) se déploie dans une forme d'éventail centrée sur une extrémité supérieure ou une extrémité arrière du coussin gonflable latéral (108, 108A, 108B, 108C, 108D, 108E) dans l'état logé, et l'état logé est créé en enroulant le coussin gonflable latéral (108, 108A, 108B, 108C, 108D, 108E) le long de lignes de pli (114, 116, 118) qui s'écartent radialement depuis le centre.

6. Dispositif de coussin gonflable latéral (100, 100A, 100B, 100C, 100D) selon l'une quelconque des revendications 1 à 5, dans lequel la seconde zone (130, 130A) est placée à proximité d'une épaule (110b) d'un occupant (100) pendant le gonflement et le déploiement du coussin gonflable latéral (108, 108A, 108B, 108C, 108D, 108E).

7. Dispositif de coussin gonflable latéral (100, 100A, 100B, 100C, 100D) selon l'une quelconque des revendications 1 à 6, dans lequel une position de départ, dans laquelle l'enroulement dans la seconde direction est démarré dans la seconde zone (130, 130A), est placée sur un côté extérieur du véhicule ou un côté intérieur du véhicule par rapport à la partie se déployant en dernier (126, 126A) de la première zone (128, 128A).

8. Dispositif de coussin gonflable latéral (100, 100A, 100B, 100C, 100D) selon l'une quelconque des revendications 1 à 7, dans lequel le coussin gonflable latéral (108, 108A, 108B, 108C, 108D, 108E) protège au moins la tête (110a) et la poitrine (110c) d'un occupant (110) pendant le gonflement et le déploiement.
